# EUROPEAN PATENT APPLICATION

(11) **EP 3 210 931 A1**
(43) Date of publication of application: **30.08.2017**
(21) Application number: 17157832.1
(22) Date of filing: 24.02.2017
(51) Int. Cl.: B66F 3/25, B66F 3/46

(54) **PUSH-UP SYSTEM FOR HEAVY LOADS**

(30) Priority: 25.02.2016 NL 2016325
(71) Applicant: Mammoet Holding B.V., 3528 AE Utrecht (NL)
(72) Inventor: Van den Broek, Anton Adrian Joachim, 5121 HD Rijen (NL); Helmens, Wessel, 2821 LT Stolwijk (NL)
(74) Representative: Van Breda, Jacobus

(57) **Abstract**

Push-up system for heavy loads comprising multiple lift modules (1) that are usable to collectively support and raise a load, wherein each lift module (1) is capable to receive a support beam (2, 2') on top of it, and wherein the support beam (2, 2') is placeable on top of the lift module (1) in at least one of a first direction and a second direction which traverses the first direction, and wherein each lift module (1) is equipped with supports (6, 6', 6") for the support beam (2', 2"), wherein the supports (6, 6' ,6") are swivably mounted at an upper end of the lift module (1) and arranged to be displaceable between a first position wherein the support's guiding surface is horizontal and a second position wherein the supports (6, 6', 6") are swiveled away from the first position so as to arrange that the support's guiding surface is perpendicular with said upper face of the lift module (1).

## Description

The invention relates to a push-up system for heavy loads comprising multiple lift modules for collectively supporting and raising or lowering a load, wherein each lift module is capable to receive a support beam on top of it, wherein said support beam is placeable on top of the lift module in at least one of a first direction and a second direction which traverses the first direction, and wherein each lift module is equipped with supports for guiding the support beam. The support beams are in alternate directions (being said first direction and said second direction) provided in a pile on top of each other so as to raise or lower the load supported by the highest support beams, by adding or removing support beams from the pile. The two directions may be exactly orthogonal with respect to each other or be at an angle different from 90°.

Dutch patent 1 037 817, the content of which is deemed incorporated herein by reference, discloses such a push-up system, wherein each lift module comprises a bottom frame and upstanding supports that are either fixed on top of the bottom frame (that is a first embodiment), or (in a second embodiment) fixed on top of a support plate that is rotatably mounted on the bottom frame. In the first embodiment there are four upstanding supports that are fixed on top of the bottom frame, wherein each support has guiding surfaces at right angles with respect to each other so as to enable that when the support beam is placed on top of the lift module, this support beam can be placed both in a first direction and in a second direction which is orthogonal to the first direction. According to Dutch patent 1 037 817 this first embodiment is inferior to a second embodiment which has a larger loadbearing capacity. In the second embodiment there are only two supports that are mounted on a rotatable support plate that is provided on top of the bottom frame. Also in this embodiment the supports are always upstanding.

The use of upstanding supports implies that there is a restriction on the lowest height of the load which can be supported by the known push-up system. Relatively low loads cannot be jacked up with the known push-up system for lack of sufficient working space. Another implication is that effective use of the second embodiment of the known push-up system with the rotatable support plate requires motorization of said support plate in order to avoid that the support plate must each time be rotated by hand. This is both costly and prone to malfunctioning. Another problem of the known push-up system is that it is not easy to replace a malfunctioning lift module.

It is an object of the invention to alleviate or provide a solution to one or more of these problems, and in a first aspect of the invention it is therefore proposed that the supports are swivably mounted at an upper end of the lift module and arranged to be displaceable between a first position wherein the support's guiding surface is horizontal and a second position wherein the supports are swiveled away from the first position so as to arrange that the support's guiding surface is perpendicular with said upper face of the lift module. In this manner the lowest height of a load for which the push-up system of the invention can be used is effectively lowered to approximately half the height that is required with application of the prior art solution.

Further the invention provides that for the sequential alternating placement in the pile or removal of support beams from the pile, the supports can be simply placed in the appropriate position to enable placement or removal of the concerning support beam that is oriented in the first direction or in the second direction. Advantageously further each lift module has four supports for this purpose, said four supports forming two couples of two supports that are jointly operable and diametrically opposed to each other with reference to a central cylinder piston rod of the lift module which is used for raising or lowering the pile of support beams and the load on top of it.

A further beneficial feature is that the guiding surface of the supports is provided with rollers. Preferably an upper face of the rollers is flush with an upper face of the lift module. This enables horizontal displacement of the support beams on top of the guiding surface of the supports when these are in the first horizontal position, and thus assists in the placement of support beams in the pile as well as their later removal from the pile.

Preferably the lift module is provided with push out rods for pushing the supports out of the second position. Such mostly vertical push out rods are simple means to initiate movement of the supports from the second position to the first position and avoids complicated motorization.

Preferably the push-up system of the invention comprises an even number of lift modules, preferably four or six placed in a rectangular configuration.

From the foregoing it will be immediately clear that the invention is also embodied in a separate lift module to be used in a push-up system according to the invention.

In order to be able to simply replace a malfunctioning lift module it is preferable that the push-up system of the invention comprises a temporary jack system with hydraulic cylinders mounted in frames that are positionable on opposite sides of such a lift module which is to be replaced, wherein said hydraulic cylinders support a temporary support beam or beams, one of said beams being positionable above a central cylinder piston rod of the lift module so as to support the load above this beam and to release said load from the lift module below it.

Accordingly the invention is also embodied in a method for replacing a lift module of a push-up system according to the invention, employing the steps of
- providing a temporary jack system with hydraulic cylinders mounted in frames, and placing said frames on opposite sides of the lift module to be replaced;
- supporting a temporary support beam or beams by the hydraulic cylinders of the temporary jack system;
- arranging at least one of said support beams between a central cylinder piston rod of the lift module to be replaced and the load supported by said lift module;
- actuating the hydraulic cylinders of the temporary jack system to support the load and release said load from the lift module to be replaced;
- removing the lift module and replacing it by another lift module.

The invention will hereinafter be further elucidated with reference to the drawing of an exemplary embodiment of a push-up system according to the invention that is not limiting as to the appended claims.

In the drawing:
- figures 1 - 8 show a lift module of a push-up system according to the invention in several operational arrangements;
- figures 9 and 10 show a detail of a support plate of a lift module according to the invention;
- figure 11 shows the push-up system of the invention in a rectangular configuration with four lift modules;
- figure 12 shows the push-up system of the invention in a rectangular configuration with six lift modules; and
- figures 13 and 14 show in detail a single lift module forming part of a push-up system, wherein said lift module is to be replaced while using a temporary jack system in accordance with the invention.

Whenever in the figures the same reference numerals are applied, these numerals refer to the same parts.

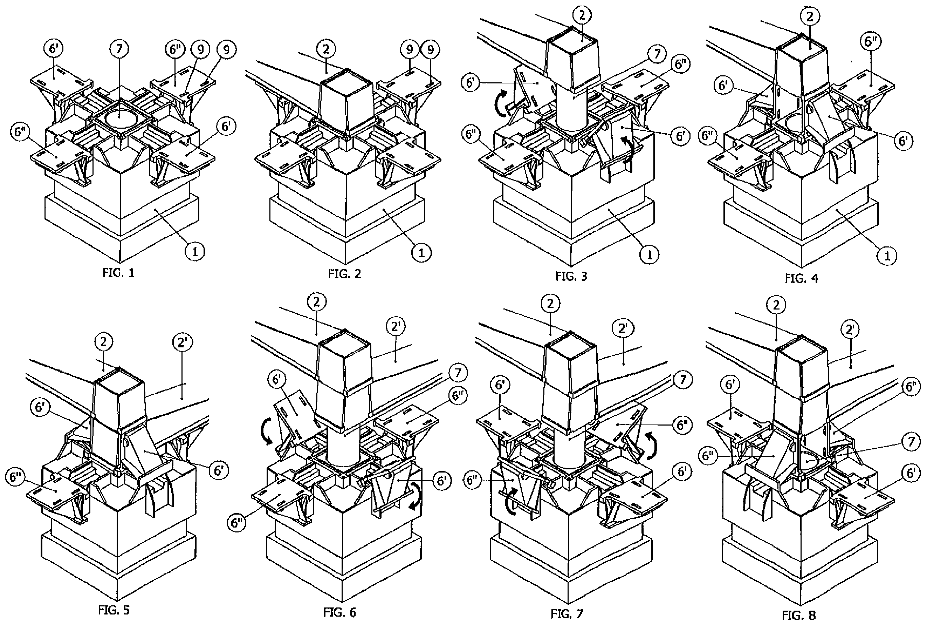

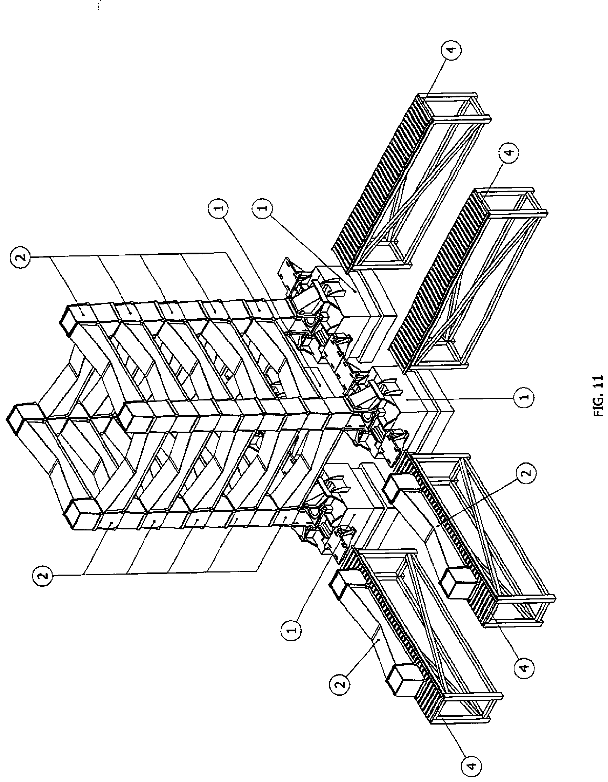

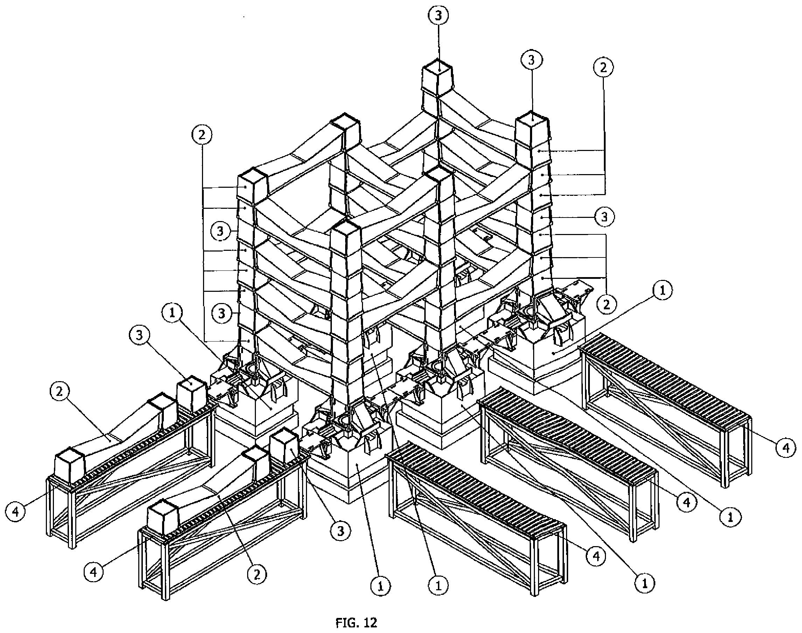

Making first reference to figures 11 and 12 the push-up system of the invention is shown in a rectangular configuration; in figure 11 employing four lift modules 1 and in figure 12 employing six lift modules 1. In a manner that is known per se from Dutch patent 1 037 817, for raising or lowering a load support beams 2 are alternatingly provided in or removed from a pile of support beams 2 that carries the load, wherein the support beams 2 are provided on top of each other in a first direction and in a second direction traverse to the first direction. The support beams 2 that are arranged in the first direction are for instance supplied or removed using the roller tracks 4 shown in the left of the figures, whereas the support beams 2 that are arranged in the second direction are supplied or removed using the roller tracks 4 which are shown in the right of the figures. The load can thus be raised or lowered by raising or lowering the pile of support beams 2 that carries the load which is supported on top of the highest support beams in the pile. Raising or lowering of the support beams 2 in the pile of support beams will now be explained with reference to the operation of a single lift module 1 as shown in figures 1 - 8.

In figure 1 a lift module 1 of the invention is shown, having several swivable supports 6', 6" that are mounted at an upper end of the lift module 1 and are positioned in a first position wherein the guiding surfaces of the supports 6', 6" are horizontal and a little staggered with reference to an upper face of the lift module 1. Each lift module 1 is provided with a central cylinder piston rod 7. When the central cylinder piston rod 7 is in the retracted position as shown in figure 1, the pile of support beams (not shown) is carried by the upper surface area of the lift module 1. Raising the pile of support beams with the lift module 1 requires jacking up by extending and raising the central cylinder piston rod 7.

In figure 2 the situation is shown that an extremity of a first support beam 2 rests on the lift module 1. Figure 3 shows that after the first support beam 2 is lifted by the central cylinder piston rod 7 to a high enough position, the swivable supports 6' that are present in the longitudinal direction of said beam 2 are displaced from their first horizontal position shown in figures 1 and 2, into a second position wherein the supports 6' are swiveled away from said first position so that eventually the guiding surfaces of the supports 6 are arranged essentially perpendicular with reference to the upper face of the lift module 1. This final second position of said two supports 6' is shown in figure 3. Figure 3 also shows that the lift module 1 has two other supports 6" that remain horizontal and a little staggered with reference to the upper surface area of the lift module 1. There are thus two couples of two supports 6', 6" each, wherein the two supports 6', 6" of each couple are jointly operable in a mirror image fashion.

After the supports 6' have reached their final upstanding position as shown in figure 4, the cylinder piston rod 7 is lowered until it is completely retracted, however with the supports 6' remaining upstanding so that the pile of support beams 2 then comes to rest on the upper edges of these supports 6'. The height of the upper edges of the supports 6' is a little bit higher than the height of the support beam 2' which is next to be introduced between said supports 6', and between the upper area of the lift module 1 and the pile of support beams 2 above it. This slightly higher height of the upper edges of the supports 6' provides room for introducing said second support beam 2' on top of the lift module 1 and between the upstanding supports 6', which as figure 5 shows is traverse with reference to the first beam 2 immediately above it. The rollers 9 that are provided in the supports 6', 6" enable horizontal displacement of the support beams 2, 2' on top of the guiding surface of the then horizontal supports for placement of said support beams 2, 2' in the pile of support beams or for their removal from said pile.

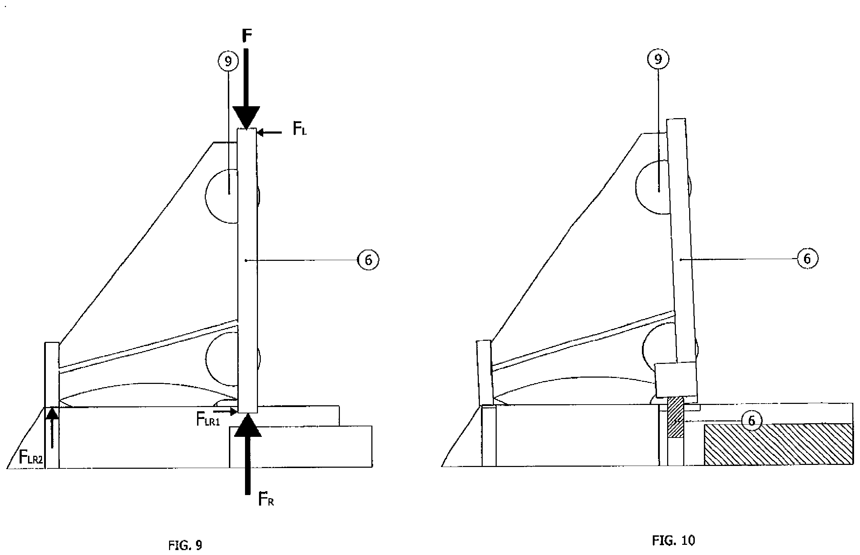

In a next step as shown in figure 6 the central cylinder piston rod 7 is then raised again, and the supports 6' can be returned to their original first horizontal position which is a little staggered with reference to the upper area of the lift module 1 as shown in figure 7, while the supports 6" that are placed in the longitudinal direction of this new beam 2' are swiveled from their original first horizontal position towards the second upstanding position. For pushing the upstanding supports 6' out of their second upstanding position and move them back to their first horizontal position as shown in figures 6 and 7, vertical push rods 8 (shown in detail in figure 9 and 10) are activated once the pile of support beams 2 is lifted from the upper edges of the upstanding supports 6'.

In figure 8 it is shown that the supports 6" have completely assumed their second upstanding position, and that the central cylinder piston rod 7 is lowered again to arrange that the then lowest support beam 2' will be resting on the upper edges of the upstanding supports 6". The process of further raising the pile of beams 2 and the load on top of it by introducing further support beams can then continue by introducing a further support beam with an orientation as shown in figure 2 and to continue the process according to what has been explained above with reference to figures 3 - 8. This process can be repeated as many times as necessary. Further for removing the support beams 2, 2' from the pile of support beams the process can be executed in reverse order.

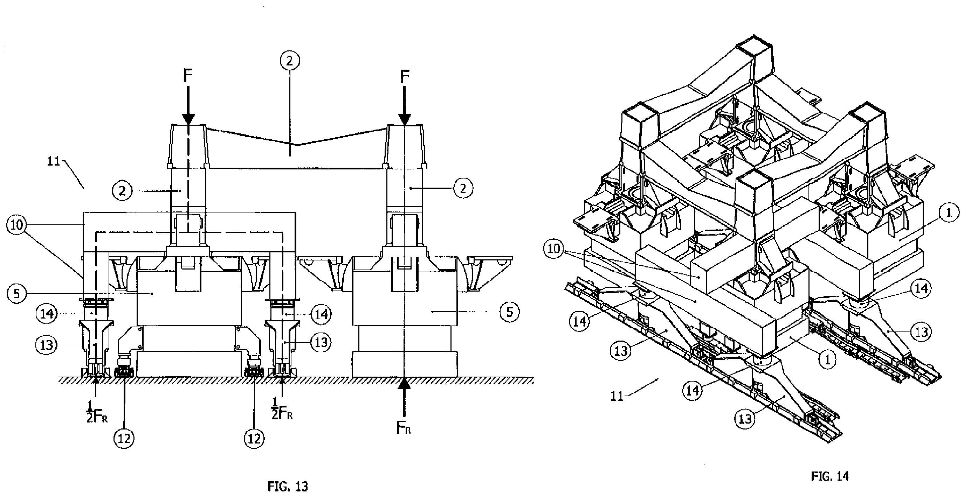

Making now reference to figures 13 and 14 a temporary jack system 11 is shown with hydraulic cylinders mounted in frames that are positionable on opposite sides of a lift module 1, wherein said hydraulic cylinders support a temporary support beam or beams 10, one of said beams being positionable above a central cylinder piston rod 7 of the lift module 1 to be replaced so as to support the load above this beam 10 and to release said load from the lift module 1 below it. By using this temporary jack system 11 it is possible to implement a method for replacing a single lift module 1 of a push-up system according to the invention. The method of the invention comprises the steps of
- providing the temporary jack system 11 that has hydraulic cylinders 14 mounted in frames 13, and placing said frames 13 on opposite sides of the lift module 1 to be replaced;
- supporting a temporary support beam or beams 10 by the hydraulic cylinders 14 of the temporary jack system 11;
- arranging at least one of said support beams 10 is placed between a central cylinder piston rod 7 of the lift module 1 to be replaced and the load supported by said lift module 1;
- actuating the hydraulic cylinders 14 of the temporary jack system 11 to support the load and release said load from the lift module 1 to be replaced;
- removing the lift module 1 and replacing it by another lift module.

Although the invention has been discussed in the foregoing with reference to an exemplary embodiment of the push-up system of the invention, the invention is not restricted to this particular embodiment which can be varied in many ways without departing from the invention. The discussed exemplary embodiment shall therefore not be used to construe the appended claims strictly in accordance therewith. On the contrary the embodiment is merely intended to explain the wording of the appended claims without intent to limit the claims to this exemplary embodiment. The scope of protection of the invention shall therefore be construed in accordance with the appended claims only, wherein a possible ambiguity in the wording of the claims shall be resolved using this exemplary embodiment.

## Claims

1. Push-up system for heavy loads comprising multiple lift modules (1) that are usable to collectively support and raise a load, wherein each lift module (1) is capable to receive a support beam (2, 2') on top of it, and wherein the support beam (2, 2') is placeable on top of the lift module (1) in at least one of a first direction and a second direction which traverses the first direction, and wherein each lift module (1) is equipped with supports (6, 6', 6") for the support beam (2', 2"), **characterized in that** the supports (6, 6', 6") are each swivably mounted at an upper end of the lift module (1) and arranged to be displaceable between a first position wherein the support's guiding surface is horizontal and a second position wherein the support (6, 6', 6") is swiveled away from the first position so as to arrange that the support's guiding surface is perpendicular with said upper face of the lift module (1).

2. Push-up system according to claim 1, **characterized in that** the guiding surface of the supports (6, 6', 6") is provided with rollers (9) wherein an upper face of the rollers (9) is flush with an upper face of the lift module (1).

3. Push-up system according to claim 1 or 2, **characterized in that** the lift module (1) is provided with push out rods (8) for pushing the supports (6, 6', 6") out of the second position.

4. Push-up system according to any one of claims 1 - 3, **characterized in that** each lift module (1) has four supports (6, 6', 6"), forming two couples of two supports that are diametrically opposed to each other with reference to a central cylinder piston rod (7) forming part of the lift module (1), wherein the two supports of each couple are jointly operable.

5. Push-up system according to any one of claims 1 - 4, **characterized in that** it comprises an even number of lift modules (1), preferably four or six placed in a rectangular configuration.

6. Push-up system according to any one of claims 1 - 5, **characterized in that** it comprises a temporary jack system (11) with hydraulic cylinders (14) mounted in frames (13) that are positionable on opposite sides of a lift module (1), wherein said hydraulic cylinders (14) support a temporary support beam or beams (10), one of said beams (10) being positionable above a central cylinder piston rod (7) of the lift module (1) so as to support the load above this beam (10) and to release said load from the lift module (1) below it.

7. Lift module (1) described as part of a push-up system according to any one of the previous claims 1 - 6.

8. Method for replacing a lift module (1) of a push-up system according to any one of the previous claims 1 - 6, **characterized by** the steps of
- providing a temporary jack system (11) with hydraulic cylinders (14) mounted in frames (13), and placing said frames (13) on opposite sides of the lift module (1) to be replaced;
- supporting a temporary support beam or beams (10) by the hydraulic cylinders (14) of the temporary jack system (11);
- arranging at least one of said support beams (10) between a central cylinder piston rod (7) of the lift module (1) to be replaced and the load supported by said lift module (1) ;
- actuating the hydraulic cylinders (14) of the temporary jack system (11) to support the load and release said load from the lift module (1) to be replaced;
- removing the lift module (1) and replacing it by another lift module.
